# EUROPÄISCHE PATENTSCHRIFT

(11) **EP 2 874 880 B1**
(45) Veröffentlichungstag und Bekanntmachung des Hinweises auf die Patenterteilung: **24.08.2016**
(21) Anmeldenummer: 13736799.1
(22) Anmeldetag: 21.06.2013
(51) Int. Cl.: B64D 11/04, B64D 13/06

(54) **KÜHLKONZEPT RÜCKPANEEL**
COOLING CONCEPT BACK PANEL
PANNEAU ARRIÈRE DANS LEQUEL EST MIS EN OEUVRE UN CONCEPT DE RÉFRIGÉRATION

(30) Priorität: 20.07.2012 US 201261673855 P
(43) Veröffentlichungstag der Anmeldung: 27.05.2015
(73) Patentinhaber: Sell Gmbh, 35745 Herborn (DE)
(72) Erfinder: WEIXLER, Frank, 35466 Rabenau (DE)
(74) Vertreter: Grosse, Wolf-Dietrich Rüdiger
(86) Internationale Anmeldenummer: PCT/EP2013/062999
(87) Internationale Veröffentlichungsnummer: WO 2014/012742

(56) Entgegenhaltungen:
- DE-A1- 19 952 523
- DE-A1-102010 035 372
- US-A- 4 361 014
- US-A1- 2003 042 361
- US-A1- 2010 224 726

## Beschreibung

### 1. Gebiet der Erfindung

Die Erfindung betrifft eine Flugzeuggalley, umfassend wenigstens ein Kühlkompartiment zur Aufnahme eines oder mehrerer Container für zu kühlende Versorgungsgüter. Derartige Container können jede Art von Einschubkästen, Tabletts oder Trolleys sein, wie sie üblicherweise in der Flugzeugindustrie zur Bestückung der Galleys Verwendung finden.

### 2. Stand der Technik

In Flugzeugen erfolgt die Versorgung der Reisenden, insbesondere die Bereitstellung von Versorgungsgütern wie Getränken und Speisen, mittels so genannter Flugzeuggalleys, die eine Vielzahl von Kompartimenten aufweisen, in die Versorgungsgüter je nach Bedarf eingestellt werden können. Diese Versorgungsgüter werden üblicherweise für jeden Flug in so genannten Trolleys, fahrbaren Containern, an das Flugzeug angeliefert und dann in die dafür vorgesehenen Kompartimente in der Flugzeuggalley eingeschoben und dort ggf. gegen Herausfallen gesichert. Diejenigen Container, die verderbliche Ware enthalten oder deren Inhalt aus anderen Gründen gekühlt werden soll, weisen entweder eigene Kühlaggregate auf oder müssen innerhalb der Flugzeuggalley auf andere Weise gekühlt werden.

Aus der Praxis sind daher bereits eine Vielzahl von Einrichtungen bekannt, mittels derer die Kühlkompartimente gekühlt werden können. Der Aufbau dieser Kühleinrichtungen ist jedoch üblicherweise sehr aufwendig und erlaubt zudem keinen kurzfristigen Umbau der Flugzeuggalley abhängig von sich ändernden Bedürfnissen. Zudem wird regelmäßig angestrebt, die Kühlung der Kühlkompartimente gleichmäßig über die gesamte Breite und gesamte Tiefe des Kühlkompartiments sicherzustellen, was in der Praxis nur mit sehr aufwendigen Mitteln gewährleistet werden kann.

Nachteilig an derartigen Flugzeuggalleys ist jedoch, dass sie nur schlecht oder aufwendig umgerüstet werden können, wenn größere oder kleinere Kompartimente je nach Flugdauer oder der Menge an zu kühlenden Versorgungsgütern benötigt werden.

### 3. Aufgabe der Erfindung

Es war daher eine Aufgabe der Erfindung, eine Flugzeuggalley zur Verfügung zu stellen, die einen einfachen Aufbau aufweist und gleichzeitig die Kühlung ihrer Kühlkompartimente auch unterschiedlicher Größe sicher gewährleisten kann. Diese Aufgabe wird im erfindungsgemäßen Sinne mit einer Flugzeuggalley, umfassend die Merkmale des Anspruchs 1, gelöst. Vorteilhafte Ausgestaltungen der Erfindung sind in den abhängigen Ansprüchen dargelegt.

### 4. Zusammenfassung der Erfindung

Im erfindungsgemäßen Sinne ist an der Rückseite der Galley jeweils ein mit einer Kühlluftöffnung und einer Abluftabfuhr verbundenes Paneel angeordnet, in dem wenigstens eine zum Kühlkompartiment hin ausgerichtete Abluftöffnung und wenigstens eine zum Kühlkompartiment ausgerichtete Kühlluftöffnung vorgesehen sind. Hierbei ist die wenigstens eine Kühlluftöffnung oberhalb der wenigstens einen Abluftöffnung vorgesehen.

Durch den erfindungsgemäßen Aufbau wird einerseits sichergestellt, dass das Kühlkompartiment räumlich im Wesentlichen gegenüber nicht gekühlten Kompartimenten gleichgestaltet bleibt, es wird andererseits aber auch ein vorzugsweise permanenter Kühlluftstrom durch das Kompartiment hindurch oder aber durch geeignete Einsätze in das Kühlkompartiment, die Öffnungen aufweisen, welche mit den Abluft- und Kühlluftöffnungen innerhalb des Paneels korrespondieren, zusammenwirken, hindurch gewährleistet. Hierdurch wird sichergestellt, dass das Kühlkompartiment in seiner Gesamtheit, zumindest jedoch der in ihm gespeicherte Container, vollständig und mit einfachen Mitteln gekühlt werden kann. Insbesondere erlaubt der erfindungsgemäße Aufbau eine Umrüstung der Flugzeuggalley je nach Bedarf und gewünschter Größe oder Anzahl des oder der Kühlkompartimente.

In einer bevorzugten Ausführungsform der Erfindung ist die wenigstens eine Abluftöffnung zur Unterseite des Kühlkompartiments und die wenigstens eine Kühlluftöffnung zur Oberseite des Kühlkompartiments hin ausgerichtet. Hierdurch wird ein gezielter Kühlluftstrom durch das Kühlkompartiment, insbesondere durch einen darin angeordneten Container hindurch von oben nach unten gewährleistet. Zudem wird sichergestellt, dass die in das Kühlkompartiment oder den Container eingeleitete Kühlluft die zu kühlenden Versorgungsgüter vollständig umströmt.

In einer weiteren bevorzugten Ausführungsform der Erfindung sind die wenigstens eine Abluftöffnung und die wenigstens eine Kühlluftöffnung mit einem Anschlusselement, vorzugsweise mit einer umlaufenden Dichtung, versehen, welche insbesondere bevorzugt in Form und Größe mit Öffnungen und ggf. Anschlusselementen, insbesondere mit umlaufenden Dichtungen, an dem für das Kühlkompartiment vorgesehene Container korrespondieren. Hierdurch wird ein Aufbau einer Flugzeuggalley geschaffen, der sicherstellt, dass aus dem Paneel zugeführte Kühlluft und über das Paneel abgeführte Abluft vollständig und ohne Erzeugung von Nebenströmen in der gewünschten Weise durch das Kühlkompartiment und / oder durch den darin angeordneten Container hindurchströmen.

Sofern der Aufbau der Flugzeuggalleys so vorgesehen ist, dass die Kühlluft durch in das Kühlkompartiment eingeschobene Container hindurchströmen soll, kann in dieser bevorzugten Ausführungsform der Erfindung ein modulartiger Aufbau besonders vorteilhaft unterstützt werden, wenn die Anschlusselemente so gestaltet sind, dass sie durch Einschieben der Container in das Kühlkompartiment hinein direkt und zwangsweise mit den Kühlluftöffnungen und Abluftöffnungen in dem Container zusammenwirken.

Es wird in diesem Zusammenhang insbesondere bevorzugt, wenn die Anschlusselemente Einrichtungen aufweisen, mit denen sie gezielt einzeln oder in ihrer Gesamtheit geschlossen und geöffnet werden können. Dies kann in einer besonders bevorzugten Ausführungsform der Erfindung beispielsweise durch einen lüftungsgitterartigen Aufbau der Anschlusselemente erfolgen, bei dem eine Mehrzahl von Lamellen aus einer ersten Öffnungsposition, die einen nahezu ungehinderten Durchtritt von Kühlluft und / oder Abluft durch das Anschlusselement hindurch erlaubt, in eine Schließposition verschwenkt werden können, bei der die Lamellen leicht einander überlappend die Öffnung innerhalb des Anschlusselements vollständig flächig abdecken. Überaus bevorzugt wird ein Anschlusselement, das einen derartigen lüftungsgitterartigen Aufbau mit einer umlaufenden Dichtung, die beispielsweise mit einer korrespondierenden Dichtung an einer Öffnung oder an einem Anschlusselement an einem in das Kühlkompartiment einschiebbaren Container zusammenwirkt, versehen ist.

In einer weiteren bevorzugten Ausführungsform der Erfindung sind die mehreren Abluftöffnungen innerhalb des Paneels vorzugsweise gleichmäßig über die Breite des Kühlkompartiments angeordnet. Hierdurch wird ein gleichmäßiger Kühlluftstrom durch das Kühlkompartiment oder den im Kühlkompartiment befindlichen Container mit einfachen Mitteln gewährleistet.

Es wird ebenso bevorzugt, wenn mehrere Kühlluftöffnungen vorzugsweise gleichmäßig über die Breite des Kühlkompartiments im Paneel angeordnet sind. Hierdurch wird ebenfalls ein gleichmäßiger Kühlluftstrom durch das Kompartiment hindurch oder durch den im Kühlkompartiment vorgesehenen Container bewirkt.

Im erfindungsgemäßen Sinne umfasst das Paneel Kühlluftleitungen und Abluftleitungen, wobei die Abluftleitungen an der

Seite des Paneels angeordnet sind. Hierdurch wird ein Paneel geschaffen, bei dem die Zufuhr und Abfuhr von Kühlluft bzw. Abluft auf kleinstem Raum bewirkt werden kann und gleichzeitig eine Erwärmung des Paneels durch die erwärmte Abluft auf ein Minimum und insbesondere auf die Wandbereiche des Paneels beschränkt ist. Die Kühlleistung über das Paneel in das Kühlkompartiment hinein wird somit nahezu unbeschränkt aufrechterhalten.

Es wird auch bevorzugt, wenn die Verbindung vom Paneel mit der Kühlluftquelle und einem Abluftspeicher, vorzugsweise einem Wärmetauscher, über flexible Schläuche erfolgt, wodurch die Anbindung des Paneels an Kühlluftquellen und Abluftspeicher hochvariabel und auch über große Strecken erfolgen kann.

Es wird zudem bevorzugt, wenn die Kühlluftquelle an der Oberseite oder Unterseite der Flugzeuggalley angeordnet ist. Die Kühlluftquelle kann ein Erzeugungsaggregat für Kühlluft sein, die Kühlluftquelle kann im erfindungsgemäßen Sinne jedoch auch ein Anschluss an eine bordseitig vorgesehene Kühlluftzufuhr sein. In jedem Fall wird eine Flugzeuggalley geschaffen, die platzsparend baut und bei der die Kühlluftzufuhr ohne Beeinträchtigung des Stauraums der Flugzeuggalley erfolgen kann.

In einer weiteren bevorzugten Ausführungsform der Erfindung übersteigt die Tiefe des Paneels nicht 4,57 cm, vorzugsweise 4,32 cm. Insbesondere wird bevorzugt, wenn die freie Tiefe des Kühlkompartiments mindestens 86,36 cm beträgt wodurch sichergestellt wird, dass das Kühlkompartiment auch zur Aufnahme standardisierter Trolleys geeignet ist.

### 5. Kurze Beschreibung der Figuren

Die Erfindung wird nachfolgend unter Bezugnahme auf zwei Figuren näher erläutert, in denen eine bevorzugte Ausführungsform der Erfindung dargestellt ist. In den Figuren zeigen
- Figur 1: Explosionsdarstellung einer erfindungsgemäßen Flugzeuggalley, und
- Figur 2: eine schematische Darstellung einer Flugzeuggalley im zusammengebauten Zustand.

### 6. Detaillierte Beschreibung der Figuren

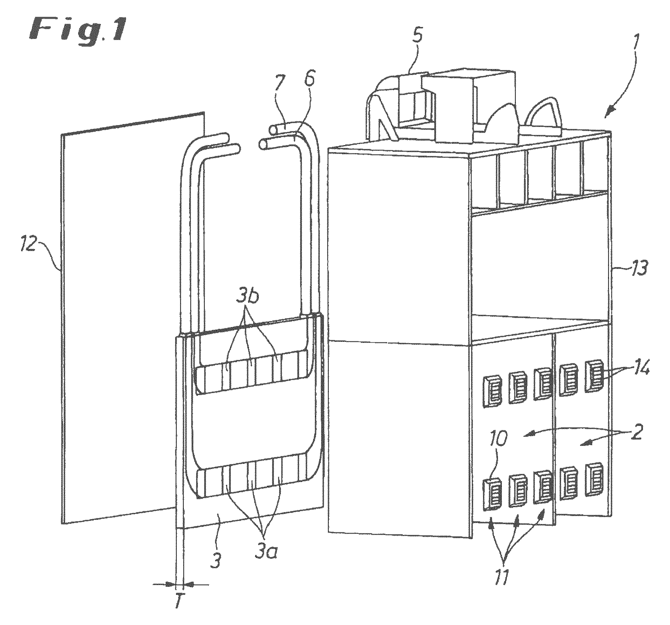

Figur 1 zeigt eine erfindungsgemäße Flugzeuggalley 1 in einer Explosionsdarstellung, wobei die Flugzeuggalley 1 ein Galleygehäuse 13 und eine Rückwand 12 umfasst. Zwischen der Rückwand 12 und dem Galleygehäuse 13 ist ein Paneel 3 angeordnet, das im zusammengebauten Zustand hinter den Kühlkompartimenten 2 der Flugzeuggalley 1 angeordnet ist. Das Paneel 3, das eine Tiefe T von 4,32 cm (1,7 Inch) aufweist, umfasst eine Reihe von Kühlluft-Zufuhröffnungen 3b, die oberhalb einer Reihe von Abluftöffnungen 3a angeordnet sind. Die Abluftabfuhr erfolgt aus dem Kühlkompartiment 2 über die Abluftöffnungen 3a und seitlich am Paneel 3 angeordnete Abluftleitungen, die in schlauchförmige Abluftleitungen 7 übergehen, welche wiederum mit einem Anschluss 5 für einen Abluftspeicher oder Wärmetauscher verbunden sind. Die obere Reihe von Kühlluftöffnungen 3b wird über flexible Schläuche 6 und eine Kühlluftquelle 5 mit Kühlluft versorgt, welche schließlich über Anschlusselemente 11 in die Kühlkompartimente 2 oder direkt in (nicht dargestellte) Container, die in die Kühlkompartimente 2 eingeschoben und dort vorzugsweise so verrastet werden, dass die Anschlusselemente 11 auf entsprechenden, containerseitigen Anschlusselementen derart zu liegen kommen, dass die Kühlluft und die Abluft direkt und ohne Nebenströme in den Container hinein und aus diesem heraus befördert werden. Jedes Anschlusselement 11 weist einen im Wesentlichen quadratischen Querschnitt und einen Aufbau ähnlich eines Lüftungsgitters mit schwenkbar gelagerten Lamellen 14 auf. Wenn die Lamellen 14, wie in der dargestellten Form, so verschwenkt werden, dass sie im Wesentlich übereinander und parallel im Anschlusselement 11 vorliegen, kann die Kühlluft und die Abluft im Wesentlichen ungehindert durch das Anschlusselement 11 hindurchtreten. Die Lamellen 14 können jedoch auch so um ihre Längsachse verschwenkt werden, dass sie einander zumindest teilweise überlappend aneinander liegend berühren und so das Anschlusselement 11 vollständig verschließen. Vorzugsweise kann jedes einzelne Anschlusselement 11 gesondert angesteuert werden, zumindest jedoch jedes Anschlusselement 11, das einem bestimmten Kühlkompartiment 2 und / oder einem bestimmten Container zugeordnet ist.

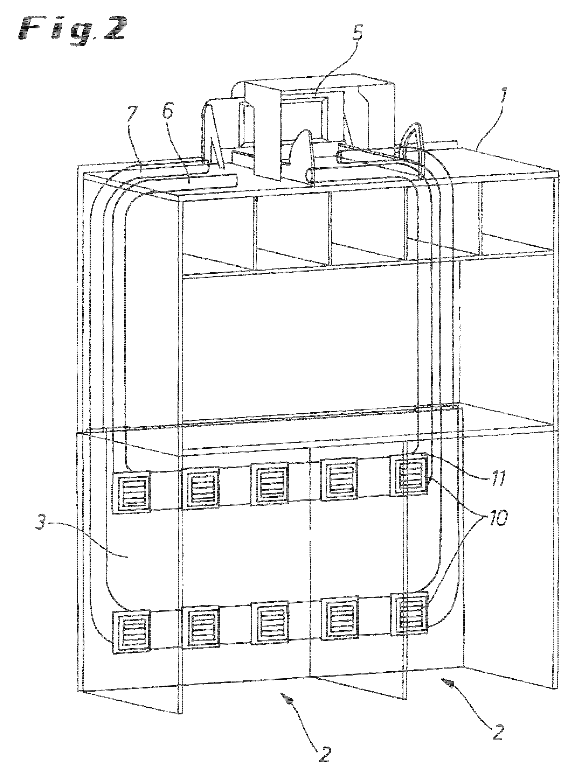

Figur 2 zeigt die erfindungsgemäße Flugzeuggalley 1 in einer schematischen Ansicht im zusammengebauten Zustand, bei dem die Anschlusselemente 11 mit diesen umgebenden Dichtungen 10 auf den (nicht dargestellten) Öffnungen für die Zufuhr von Kühlluft in das Kühlkompartiment 2 und die Abfuhr von Abluft aus dem Kühlkompartiment 2 hinaus am Paneel 3 angeordnet sind. Die Zufuhr von Kühlluft von der Kühlluftquelle 5 zum Paneel 3 erfolgt über flexible Schläuche 6, die in ein Zuluftrohr innerhalb des Paneels 3 münden. Die aus dem Kühlkompartiment 2 abgezogene Abluft verläuft entsprechend über im Paneel 3 angeordnete und seitlich im Paneel vorgesehene Abluftleitungen und über flexible Schläuche 7 zu einem Abluftspeicher, vorzugsweise in der Form eines Wärmetauschers.

### Bezugszeichenliste:

- 1: Flugzeuggalley
- 2: Kühlkompartiment
- 3: Paneel
- 3a: Abluftöffnung
- 3b: Kühlluftöffnung
- 5: Kühlluftquelle
- 6: Kühlluftleitung
- 7: Abluftleitung
- 9: Schlauch
- 10: Dichtung
- 11: Anschlusselemente
- 12: Rückwand
- 13: Galleygehäuse
- 14: Lamellen

## Patentansprüche

1. Flugzeuggalley (1), umfassend wenigstens ein Kühlkompartiment (2) zur Aufnahme eines Containers für zu kühlende Versorgungsgüter, wobei an der Rückseite der Galley (1) wenigstens eine mit einer Kühlluftquelle (5) und einer Abluftabfuhr verbundene Wand angeordnet ist, in der wenigstens eine zum Kühlkompartiment (2) hin ausgerichtete Abluftöffnung (3a) und wenigstens eine zum Kühlkompartiment (2) hin ausgerichtete Kühlluftöffnung (3b) vorgesehen sind,
**dadurch gekennzeichnet, dass**
die Wand als ein Paneel (3) mit integrierten Luftkanälen (6, 7) ausgebildet ist und Kühlluftleitungen (6) und Abluftleitungen (7) umfasst, wobei zumindest die Abluftleitungen (7) an der Seite des Paneel (3) angeordnet sind, wobei die wenigstens eine Kühlluftöffnung (3b) oberhalb der wenigstens einen Abluftöffnung (3a) vorgesehen ist.

2. Flugzeuggalley (1) gemäß Anspruch 1, **dadurch gekennzeichnet, dass** die wenigstens eine Abluftöffnung (3a) zur Unterseite des Kühlkompartiments (2) und die wenigstens eine Kühlluftöffnung (3b) zur Oberseite des Kühlkompartiments (2) ausgerichtet sind.

3. Flugzeuggalley (1) gemäß einem der voranstehenden Ansprüche, **dadurch gekennzeichnet, dass** die wenigstens eine Abluftöffnung (3a) und die wenigstens eine Kühlluftöffnung (3b) mit einem Anschlusselement (11), vorzugsweise einer umlaufenden Dichtung (10) versehen sind, die vorzugsweise in Form und Größe mit Öffnungen und ggf. Anschlusselementen (11), insbesondere Dichtungen (10) an dem für das Kühlkompartiment (2) vorgesehenen Container korrespondieren.

4. Flugzeuggalley (1) gemäß einem der voranstehenden Ansprüche, **dadurch gekennzeichnet, dass** mehrere Abluftöffnungen (3a) vorzugsweise gleichmäßig über die Breite des Kühlkompartiments (2) verteilt im Paneel (3) angeordnet sind.

5. Flugzeuggalley (1) gemäß einem der voranstehenden Ansprüche, **dadurch gekennzeichnet, dass** mehrere Kühlluftöffnungen (3b) vorzugsweise gleichmäßig über die Breite des Kühlkompartiments (2) verteilt im Paneel (3) angeordnet sind.

6. Flugzeuggalley (1) gemäß einem der voranstehenden Ansprüche, **dadurch gekennzeichnet, dass** die Verbindung vom Paneel (3) mit der Kühlluftquelle (5) und einem Abluftspeicher, vorzugsweise einem Wärmetauscher, flexible Schläuche (9) umfasst.

7. Flugzeuggalley (1) gemäß einem der voranstehenden Ansprüche, **dadurch gekennzeichnet, dass** die Kühlluftquelle (5) an der Oberseite oder der Unterseite der Flugzeuggalley (1) angeordnet ist.

8. Flugzeuggalley (1) gemäß einem der voranstehenden Ansprüche, **dadurch gekennzeichnet, dass** die Tiefe des Paneels (3) 4,57 cm (1,8 Inch), vorzugsweise 4,32 cm (1,7 Inch) nicht übersteigt.

9. Flugzeuggalley (1) gemäß einem der voranstehenden Ansprüche, **dadurch gekennzeichnet, dass** die freie Tiefe des Kühlkompartiments (2) mindestens 86,36 cm (34 Inch) beträgt.

## Claims

1. An aircraft galley (1) comprising at least one cooling compartment (2) for receiving a container for foods and/or drinks to be cooled, wherein at least one wall, which is connected to a cooling air source (5) and an exhaust air structure, is arranged on the rear side of the galley (1) and at least one exhaust air opening (3a) oriented toward the cooling compartment (2) and at least one cooling air opening (3b) oriented toward the cooling compartment (2) are provided in said wall,
**characterized in that**
the wall is realized in the form of a panel (3) with integrated air ducts (6, 7) and comprises cooling air ducts (6) and exhaust air ducts (7), wherein at least the exhaust air ducts (7) are arranged on the side of the panel (3), and wherein the at least one cooling air opening (3b) is provided above the at least one exhaust air opening (3a).

2. The aircraft galley (1) according to claim 1, **characterized in that** the at least one exhaust air opening (3a) is oriented toward the underside of the cooling compartment (2) and the at least one cooling air opening (3b) is oriented toward the upper side of the cooling compartment (2).

3. The aircraft galley (1) according to one of the preceding claims, **characterized in that** the at least one exhaust air opening (3a) and the at least one cooling air opening (3b) are provided with a connecting element (11), particularly a peripheral seal (10), wherein the shape and size of said connecting elements preferably correspond to openings and, if applicable, connecting elements (11), particularly seals (10), on the container provided for the cooling compartment (2).

4. The aircraft galley (1) according to one of the preceding claims, **characterized in that** a plurality of exhaust air openings (3a) are preferably arranged in the panel (3) in a uniformly distributed fashion over the width of the cooling compartment (2).

5. The aircraft galley (1) according to one of the preceding claims, **characterized in that** a plurality of cooling air openings (3b) are preferably arranged in the panel (3) in a uniformly distributed fashion over the width of the cooling compartment (2).

6. The aircraft galley (1) according to one of the preceding claims, **characterized in that** the connection of the panel (3) to the cooling air source (5) and an exhaust air accumulator, preferably a heat exchanger, comprises flexible hoses (9).

7. The aircraft galley (1) according to one of the preceding claims, **characterized in that** the cooling air source (5) is arranged on the upper side or the underside of the aircraft galley (1).

8. The aircraft galley (1) according to one of the preceding claims, **characterized in that** the depth of the panel (3) does not exceed 4.57 cm (1.8 inch), preferably 4.32 cm (1.7 inch).

9. The aircraft galley (1) according to one of the preceding claims, **characterized in that** the clear depth of the cooling compartment (2) amounts to at least 86.36 cm (34 inch).

## Revendications

1. Office d'avion (1), comprenant au moins un compartiment réfrigérant (2) destiné à recevoir un contenant pour des produits d'alimentation à réfrigérer, étant disposées sur la face arrière (1) au moins une cloison reliée à une source d'air de refroidissement (5) et une évacuation d'air, dans lequel sont prévus au moins un orifice d'évacuation d'air (3a) dirigé vers le compartiment réfrigérant (2) et au moins un orifice d'orifice d'air de refroidissement (3b) dirigé vers le compartiment réfrigérant (2),
**caractérisé en ce que**
la cloison est réalisée sous forme d'un panneau (3) à canaux à air intégrés (6, 7) et comprend des conduites d'air de refroidissement (6) et des conduites d'évacuation d'air (7), au moins les conduites d'évacuation d'air (7) étant disposées sur le côté du panneau (3), l'au moins un orifice d'air de refroidissement (3b) étant prévu au-dessus de l'au moins un orifice d'évacuation d'air (3a).

2. Office d'avion (1) selon la revendication 1, **caractérisé en ce que** l'au moins un orifice d'évacuation d'air (3a) est dirigé vers la face inférieure du compartiment réfrigérant (2) et l'au moins un orifice d'air de refroidissement (3b) vers la face supérieure du compartiment réfrigérant (2).

3. Office d'avion (1) selon une des revendications précédentes, **caractérisé en ce que** l'au moins un orifice d'évacuation d'air (3a) et l'au moins un orifice d'air de refroidissement (3b) sont pourvus d'un élément de raccordement (11), de préférence un joint périphérique (10), qui correspondent de préférence par leur forme et leur taille à des orifices et éventuellement des éléments de raccordement (11), en particulier des joints (10), au niveau du contenant prévu pour le compartiment réfrigérant (2).

4. Office d'avion (1) selon une des revendications • précédentes, **caractérisé en ce que** plusieurs orifices d'évacuation d'air (3a) sont disposés de préférence répartis régulièrement sur la largeur du compartiment réfrigérant (2) dans le panneau (3).

5. Office d'avion (1) selon une des revendications précédentes, **caractérisé en ce que** plusieurs orifices d'air de refroidissement (3b) sont disposés de préférence répartis régulièrement sur la largeur du compartiment réfrigérant (2) dans le panneau (3).

6. Office d'avion (1) selon une des revendications précédentes, **caractérisé en ce que** la liaison du panneau (3) avec la source d'air de refroidissement (5) et un accumulateur d'air d'échappement, de préférence un échangeur de chaleur, comprend des tuyaux flexibles (9).

7. Office d'avion (1) selon une des revendications précédentes, **caractérisé en ce que** la source d'air de refroidissement (5) est disposée sur la face supérieure ou la face inférieure de l'office d'avion (1).

8. Office d'avion (1) selon une des revendications précédentes, **caractérisé en ce que** la profondeur du panneau (3) ne dépasse pas 4,57 cm (1,8 pouces), de préférence 4,32 cm (1,7 pouces).

9. Office d'avion (1) selon une des revendications précédentes, **caractérisé en ce que** la profondeur libre du compartiment réfrigérant (2) est d'au moins 86,36 cm (34 pouces).
